# EUROPEAN PATENT SPECIFICATION

(11) **EP 2 387 250 B1**
(45) Date of publication and mention of the grant of the patent: **28.01.2015**
(21) Application number: 11003752.0
(22) Date of filing: 06.05.2011
(51) Int. Cl.: H04N 19/44, H04N 21/235, H04N 21/2389, H04N 21/435, H04N 19/70, H04N 21/4402, H04N 21/8358, H04N 21/845

(54) **Method and system for watermark insertion using video start codes**
Verfahren und System zur Wasserzeicheneinfügung unter Verwendung von Videostartcodes
Procédé et système d'insertion de filigrane à l'aide de codes de lancement vidéo

(30) Priority: 11.05.2010 US 333360 P; 21.07.2010 US 840444
(43) Date of publication of application: 16.11.2011
(73) Proprietor: Broadcom Corporation, Irvine, CA 92617 (US)
(72) Inventor: Mamidwar, Rajesh, 92127 San Diego California (US); Wan, Wade, 92867 Orange, CA (US)
(74) Representative: Jehle, Volker Armin

(56) References cited:
- WO-A1-2008/118145
- WO-A1-2010/003152
- US-A1- 2009 080 689

## Description

### FIELD OF THE INVENTION

Certain embodiments of the invention relate to data processing. More specifically, certain embodiments of the invention relate to a method and system for watermark insertion using video start codes.

### BACKGROUND OF THE INVENTION

Digital video technology is enabling and generating ever new applications with a broadening range of requirements regarding basic video characteristics such as spatial/temporal resolution, chroma format and/or sample accuracy. Application areas may range from videoconferencing over mobile TV and broadcasting of standard-definition (SD) TV or high-definition (HD) TV content up to professional video recording, for example. Various video coding standards such as, for example, MPEG-1, MPEG-2, MPEG-4, H.263, and H.264/MPEG-4 advanced video coding (AVC), have been established for encoding digital video sequences in a compressed manner. For example, H.264/MPEG-4 AVC is a newly established video coding standard which has demonstrated significantly improved coding efficiency, substantially enhanced error robustness, and increased flexibility and scope of applicability relative to previous standards. To address needs for flexibility and/or customizability, the H.264/MPEG-4 AVC defines a network abstraction layer (NAL) structure. The NAL is designed to provide a network-friendly video representation which allows the same video syntax to be used in many different network environments. In the NAL structure, the coded video data may be organized into NAL units which provide support for the packet-based approach of most existing networks.

In a coded or compressed video stream, there may be start codes embedded in the stream. For example, there may be a start code for each of the NAL units in a H.264/MPEG-4 AVC coded video stream. Start codes are used for several purposes including, for example, identifying some of the structures in the coding syntax and/or re-synchronization to the stream for random access or in case of corruption. Each start code may comprise, for example, a 3-byte start code prefix followed by a 1-byte start code value or suffix. The start code value or suffix may identify the type of data in the structure associated with the start code.

Watermarking is a technique utilized to protect digital media from unauthorized use or illegal copying, such as with copyrighted material, for example. Watermarking of digital media may fall into two categories: visible or invisible. Visible watermarks are typically added to digital images or videos to indicate ownership and to thwart unauthorized use of the images. The watermark may comprise the identity of the owner and/or a copyright symbol and date, for example. This type of watermark may be considered a spatial watermark in that the data is embedded spatially in an image or a video, and the watermark signal is distinct from the original data. Spatial watermarks may not be robust against attacks due to the ability of filtering, removing and/or cropping the data.

Invisible watermarks do not change the image or the video to a perceptible extent. This may be accomplished by minor changes in the least significant bits of the original data, for example. Watermarks that are unknown to the end user may be designated as steganographic watermarks.

A watermarking process may embed the watermark data, for example, using a spread-spectrum method, where the watermark data to be embedded may be spread over a multitude of frequencies by modulating the watermark data with pseudo-noise before adding them to the original data. Detecting or extracting whether a watermark is present may also be important in the protection of multimedia data.

WO 2010/003152 A1 describes systems and methods for imperceptibly embedding information by overwriting original video content with other content from a bitstream. Replacement of original content is implemented by referencing other information in the bitstream, also called reference content. A described method includes the steps of analyzing the compressed bitstream using a preprocessor to identify locations that can be imperceptibly modified, generating at least one piece of replacement data for each identified location using the pre-processor, selecting pieces of replacement data using an embedding device, and embedding the payload information in the compressed bitstream by using the embedding device to overwrite at least a portion of the compressed bitstream with the selected replacement data.

US 2009/080689 A1 describes a method for inserting a watermark in encoded content, including the steps of receiving encoded content, receiving at least one pre-processed watermark unit, and replacing directly a number of bits starting at a position in the encoded content with an alternative value, wherein the alternative value has embedded therein watermark signals, wherein the alternative value is selected from among a plurality of alternative values specified in the at least one said watermark unit. Further, a method for replacing a watermark in encoded content is described which includes the steps of receiving encoded content, receiving at least one pre-processed watermark unit and replacing a number of bits starting at a position in the encoded content with a value, wherein the value is specified in the at least one watermark unit.

Further limitations and disadvantages of conventional and traditional approaches will become apparent to one of skill in the art, through comparison of such systems with the present invention as set forth in the remainder of the present application with reference to the drawings.

According to the invention, there are provided a method for data processing as defined by independent claim 1 and a system for data processing as defined by independent claim 9.

Further advantageous features of the invention are defined by the dependent claims.

Advantageously, a start code which comprises a start code suffix with a second reserved value is utilized for each of said corresponding watermark control information.

Advantageously, the method further comprises selecting a determined alternative version for a portion of one of said plurality of video frames for said decoding of said received compressed video stream by swapping a first reserved value in a start code suffix of said determined alternative version and a data type value in a start code suffix of said default version which corresponds to said determined alternative version.

Advantageously, said received compressed video stream comprises a H.264/MPEG-4 advanced video coding (AVC) compressed video stream.

Advantageously, said H.264/MPEG-4 AVC compressed video stream comprises a series of network abstraction layer (NAL) units, and each of said series of NAL units comprises a start code with a start code suffix.

Advantageously, a start code which comprises a start code suffix with a second reserved value is utilized for each of said corresponding watermark control information.

Advantageously, said one or more processors and/or circuits are operable to select a determined alternative version for a portion of one of said plurality of video frames for said decoding of said received compressed video stream by swapping a first reserved value in a start code suffix of said determined alternative version and a data type value in a start code suffix of said default version which corresponds to said determined alternative version.

Advantageously, said received compressed video stream comprises a H.264/MPEG-4 advanced video coding (AVC) compressed video stream.

Advantageously, said H.264/MPEG-4 AVC compressed video stream comprises a series of network abstraction layer (NAL) units, and each of said series of NAL units comprises a start code with a start code suffix.

Advantageously, said default version comprises video data with no watermark, and said alternative version comprises said video data with a watermark.

Advantageously, said default version comprises video data with one type of watermark, and said alternative version comprises said video data with a different type of watermark.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary video processing system that is operable to provide watermark insertion using video start codes, in accordance with an embodiment of the invention.
FIG. 2 is a block diagram illustrating an exemplary receiver that is operable to provide watermark insertion using video start codes, in accordance with an embodiment of the invention.
FIG. 3 is a block diagram illustrating an exemplary compressed video stream, in accordance with an embodiment of the invention.
FIG. 4 is a block diagram illustrating an exemplary modified compressed video frame data for decoding, in accordance with an embodiment of the invention.
FIG. 5 is a flow chart illustrating exemplary steps for watermark insertion using video start codes, in accordance with an embodiment of the invention.

### DETAILED DESCRIPTION OF THE INVENTION

Certain embodiments of the invention can be found in a method and system for watermark insertion using video start codes. In various embodiments of the invention, a receiver may be operable to receive, based on embedded watermarks in a compressed video stream which comprises a plurality of video frames, a default version for each portion of each of the plurality of video frames in the compressed video stream, and an alternative version and corresponding watermark control information for one or more portions of one or more of the plurality of video frames in the compressed video stream. In an exemplary embodiment of the invention, the default version may comprise video data with no watermark and the alternative version may comprise the video data with a watermark. In another exemplary embodiment of the invention, the default version may comprise video data with one type of watermark and the alternative version may comprise the video data with a different type of watermark. A start code which may comprise a start code suffix with a data type value may be utilized for each of the default versions. A start code which may comprise a start code suffix with a first reserved value may be utilized for each of the alternative versions. A start code which may comprise a start code suffix with a second reserved value may be utilized for each of the corresponding watermark control information.

The receiver may be operable to determine one or more of the default versions and/or one or more of the alternative versions that should be utilized for decoding the received compressed video stream, based on the corresponding watermark control information and/or specific information locally associated with the receiver. The determined one or more of the default versions and/or the determined one or more of the alternative versions may be selected by the receiver for the decoding of the received compressed video stream by modifying the received compressed video stream based on the determination. In this regard, the determined one or more of the default versions and/or the determined one or more of the alternative versions may be selected based on one or more start codes, where each of the start codes may comprise a start code suffix.

The receiver may be operable to select a determined alternative version for a portion of one of the plurality of video frames for the decoding of the received compressed video stream by modifying the start code of the determined alternative version so that the start code suffix of the determined alternative version may comprise the data type value. The start code of the corresponding default version, which is an unselected version, may then be modified so that the start code suffix of the corresponding default version may comprise an unused or reserved value such as, for example, the first reserved value or other reserved value. In this regard, for example, a determined alternative version may be selected for the decoding of the received compressed video stream by swapping the first reserved value in the start code suffix of the determined alternative version and the data type value in the start code suffix of the default version which corresponds to the determined alternative version. Then, for each portion of each of the plurality of video frames in the received compressed video stream, a version which comprises a start code suffix with the data type value may be processed or decoded during the decoding of the received compressed video stream.

In an exemplary embodiment of the invention, the received compressed video stream may comprise a H.264/MPEG-4 advanced video coding (AVC) compressed video stream. The H.264/MPEG-4 AVC compressed video stream may comprise a series of network abstraction layer (NAL) units, and each of the series of NAL units may comprise a start code with a start code suffix.

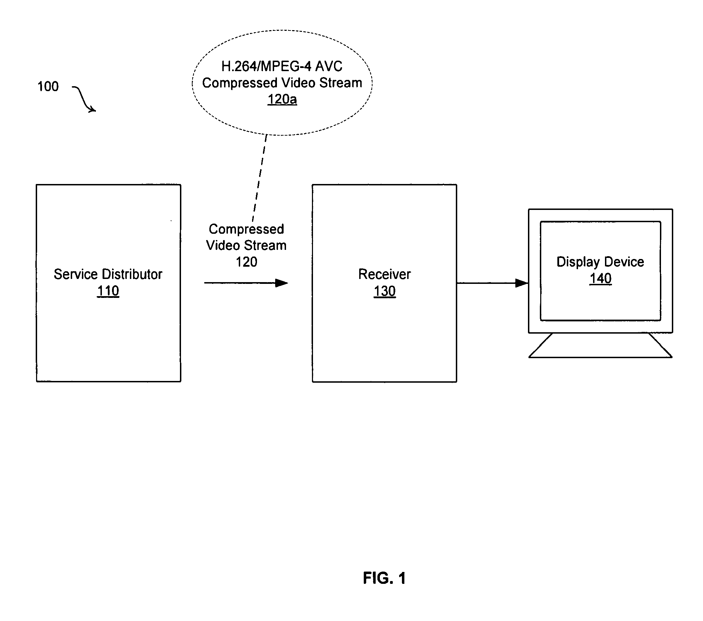

FIG. 1 is a block diagram illustrating an exemplary video processing system that is operable to provide watermark insertion using video start codes, in accordance with an embodiment of the invention. Referring to FIG. 1, there is shown a video processing system 100. The video processing system 100 may comprise a service distributor 110, a compressed video stream 120, a receiver 130 and a display device 140.

The service distributor 110 may comprise suitable logic, circuitry, interfaces and/or code that may be operable to distribute content or programs via a transport stream such as the compressed video stream 120 to the receiver 130. The service distributor 110 such as, for example, a headend system may be operable to provide various services such as, for example, distribution, multicast, and/or quality of service necessary for a reliable and timely transmission of content or programs to the receiver 130. The service distributor 110 may utilize, for example, a cable TV network, a satellite broadcasting network, the Internet protocol (IP) data network such as the Internet, and/or a wireless communication network for delivery of services or content to the receiver 130.

The service distributor 110 may be operable to embed watermarks in one or more portions of one or more of a plurality of video frames and transmit the plurality of video frames with embedded watermarks via the compressed video stream 120 to the receiver 130. In an exemplary embodiment of the invention, the service distributor 110 may be operable to transmit, for each portion of each of the plurality of video frames, a default version and for one or more portions of one or more of the plurality of video frames, an alternative version and corresponding watermark control information, in the compressed video stream 120, to the receiver 130. In an exemplary embodiment of the invention, the default version may comprise video data with no watermark and the alternative version may comprise the video data with watermark. In another exemplary embodiment of the invention, the default version may comprise video data with one type of watermark and the alternative version may comprise the video data with a different type of watermark. The watermark control information, along with some specific information which may be locally associated with the receiver 130, may be utilized by the receiver 130 to determine which of the default version or the alternative version should be utilized for decoding during decoding of the received compressed video stream 120.

The receiver 130 may comprise suitable logic, circuitry, interfaces and/or code that may be operable to receive a transport stream such as the compressed video stream 120 from the service distributor 110. In an exemplary embodiment of the invention, the receiver 130 such as, for example, a set-top box (STB), a cable TV receiver or a satellite TV receiver may be operable to receive, based on embedded watermarks in a compressed video stream 120 which comprises a plurality of video frames, a default version for each portion of each of the plurality of video frames in the compressed video stream 120, and an alternative version and corresponding watermark control information for one or more portions of one or more of the plurality of video frames in the compressed video stream 120. In an exemplary embodiment of the invention, the default version may comprise video data with no watermark and the alternative version may comprise the video data with a watermark. In another exemplary embodiment of the invention, the default version may comprise video data with one type of watermark and the alternative version may comprise the video data with a different type of watermark. A start code which may comprise a start code suffix with a data type value may be utilized for each of the default versions. A start code which may comprise a start code suffix with a first reserved value may be utilized for each of the alternative versions. A start code which may comprise a start code suffix with a second reserved value may be utilized for each of the corresponding watermark control information.

The receiver 130 may be operable to determine one or more of the default versions and/or one or more of the alternative versions that should be utilized for decoding the received compressed video stream 120, based on the corresponding watermark control information and/or specific information locally associated with the receiver 130. For example, according to information provided in the corresponding watermark control information, the determination between the default version and the alternative version may be based on model type, postal zip code, time zone, video connection type such as HDMI, component or s-video, and/or version of the system which may be associated with the receiver 130. The determination between the default version and the alternative version may also be, for example, based on identification (ID) number of the receiver 130 and/or ownership information which may be locally associated with the receiver 130. The determined one or more of the default versions and/or the determined one or more of the alternative versions may be selected by the receiver 130 for the decoding of the received compressed video stream 120. In this regard, the determined one or more of the default versions and/or the determined one or more of the alternative versions may be selected based on one or more start codes, where each of the start codes may comprise a start code suffix.

The receiver 130 may be operable to select a determined alternative version for a portion of one of the plurality of video frames for the decoding of the received compressed video stream 120 by modifying the start code of the determined alternative version so that the start code suffix of the determined alternative version may comprise the data type value. The start code of the corresponding default version, which is an unselected version, may then be modified so that the start code suffix of the corresponding default version may comprise an unused or reserved value such as, for example, the first reserved value or other reserved value. In this regard, for example, a determined alternative version may be selected for the decoding of the received compressed video stream 120 by swapping the first reserved value in the start code suffix of the determined alternative version and the data type value in the start code suffix of the default version which corresponds to the determined alternative version. For each portion of each of the plurality of video frames in the received compressed video stream 120, a version which comprises a start code suffix with the data type value may be processed or decoded during the processing or decoding of each of the video frames. Accordingly, a version which comprises a start code suffix with the first reserved value and the corresponding watermark control information which comprises a start code suffix with the second reserved value may be ignored during the processing or decoding of each of the video frames. The decoded or decompressed video frames may be displayed or presented by the display device 140 to users with or without embedded watermarks. In this regard, for example, the receiver 130 may generate a signature of the receiver 130, which may be detected by a watermark detection equipment due to embedded watermarks. The signature which may be generated by the receiver 130 may be different from other signatures which may be generated by other receivers, for example.

In an exemplary embodiment of the invention, the compressed video stream 120 may comprise a H.264/MPEG-4 AVC compressed video stream 120a. The H.264/MPEG-4 AVC compressed video stream 120a may comprise a series of NAL units, and each of the series of NAL units may comprise the start code with the start code suffix. In this regard, for example, the NAL unit corresponding to the default version of a portion of a frame may comprise a slice of the frame with the data type value of 1 or 5 in the start code suffix. The NAL unit corresponding to the alternative version of a portion of a frame may comprise a slice of the frame with a reserved value of 30 in the start code suffix, for example. The NAL unit corresponding to each of the corresponding watermark control information may comprise data with a reserved value of 31 in the start code suffix, for example. According to the H.264/MPEG-4 AVC standard, the value of 5 in the start code suffix is associated with slices of an instantaneous decoding refresh (IDR) frame, and the value of 1 in the start code suffix is associated with slices of a non-IDR frame. The values 16 through 18, 21 through 23, 24 through 31 are unused or reserved values in the start code suffix.

The display device 140 may comprise suitable logic, circuitry, interfaces and/or code that may be operable to display or present processed or decoded content or programs to users. Some of the displayed or presented video content may comprise watermarks.

In operation, the service distributor 110 may be operable to transmit, for each portion of each of the plurality of video frames, a default version and for one or more portions of one or more of the plurality of video frames, an alternative version and corresponding watermark control information, in the compressed video stream 120, to the receiver 130. In an exemplary embodiment of the invention, the default version may comprise video data with no watermark and the alternative version may comprise the video data with watermark. In another exemplary embodiment of the invention, the default version may comprise video data with one type of watermark and the alternative version may comprise the video data with a different type of watermark. The receiver 130 may be operable to receive, based on embedded watermarks in a compressed video stream 120 which comprises a plurality of video frames, a default version for each portion of each of the plurality of video frames in the compressed video stream 120, and an alternative version and corresponding watermark control information for one or more portions of one or more of the plurality of video frames in the compressed video stream 120. A start code which may comprise a start code suffix with a data type value may be utilized for each of the default versions. A start code which may comprise a start code suffix with a first reserved value may be utilized for each of the alternative versions. A start code which may comprise a start code suffix with a second reserved value may be utilized for each of the corresponding watermark control information.

The receiver 130 may be operable to determine one or more of the default versions and/or one or more of the alternative versions that should be utilized for decoding the received compressed video stream 120, based on the corresponding watermark control information and/or specific information locally associated with the receiver 130. For example, according to information provided in the corresponding watermark control information, the determination between the default version and the alternative version may be based on model type, postal zip code, time zone, video connection type such as HDMI, component or s-video, and/or version of the system which may be associated with the receiver 130. The determination between the default version and the alternative version may also be, for example, based on identification (ID) number of the receiver 130 and/or ownership information which may be locally associated with the receiver 130. The determined one or more of the default versions and/or the determined one or more of the alternative versions may be selected by the receiver 130 for the decoding of the received compressed video stream 120 by modifying the received compressed video stream 120 based on the determination. In this regard, the determined one or more of the default versions and/or the determined one or more of the alternative versions may be selected based on one or more start codes, where each of the start codes may comprise a start code suffix.

The receiver 130 may be operable to select a determined alternative version for a portion of one of the plurality of video frames for the decoding of the received compressed video stream 120 by modifying the start code of the determined alternative version so that the start code suffix of the determined alternative version may comprise the data type value. The start code of the corresponding default version, which is an unselected version, may then be modified so that the start code suffix of the corresponding default version may comprise an unused or reserved value such as, for example, the first reserved value or other reserved value. In this regard, for example, a determined alternative version may be selected for the decoding of the received compressed video stream 120 by swapping the first reserved value in the start code suffix of the determined alternative version and the data type value in the start code suffix of the default version which corresponds to the determined alternative version.

For each portion of each of the plurality of video frames in the received compressed video stream 120, a version which comprises a start code suffix with the data type value may be processed or decoded during the processing or decoding of each of the video frames. Accordingly, a version which comprises a start code suffix with the first reserved value and the corresponding watermark control information which comprises a start code suffix with the second reserved value may be ignored during the processing or decoding of each of the video frames. The decoded or decompressed video frames may be displayed or presented by the display device 140 to users with or without embedded watermarks. In this regard, for example, the receiver 130 may generate a signature of the receiver 130, which may be detected by a watermark detection equipment due to embedded watermarks. The signature which may be generated by the receiver 130 may be different from other signatures which may be generated by other receivers, for example.

In an exemplary embodiment of the invention, the compressed video stream 120 may comprise a H.264/MPEG-4 AVC compressed video stream 120a. The H.264/MPEG-4 AVC compressed video stream 120a may comprise a series of NAL units, and each of the series of NAL units may comprise the start code with the start code suffix. In this regard, for example, the NAL unit corresponding to the default version of a portion of a frame may comprise a slice of the frame with the data type value of 1 or 5 in the start code suffix. The NAL unit corresponding to the alternative version of a portion of a frame may comprise a slice of the frame with a reserved value of 30 in the start code suffix, for example. The NAL unit corresponding to each of the corresponding watermark control information may comprise data with a reserved value of 31 in the start code suffix, for example.

In an exemplary embodiment of the invention, the receiver 130 may be operable to embed or insert additional watermark data, which may comprise information, for example, locally associated with the receiver 130, into video data of the selected version of some portion of some frame.

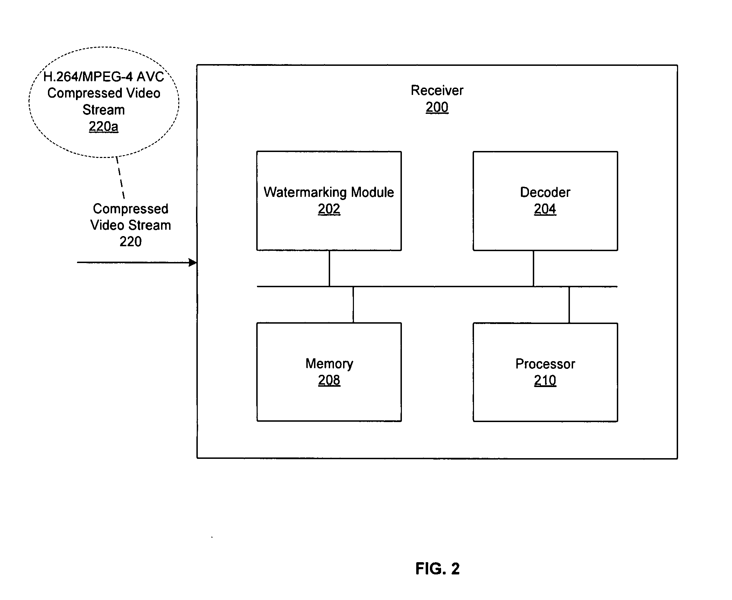

FIG. 2 is a block diagram illustrating an exemplary receiver that is operable to provide watermark insertion using video start codes, in accordance with an embodiment of the invention. Referring to FIG. 2, there is shown a receiver 200. The receiver 200 such as a STB, a cable TV receiver or a satellite TV receiver may comprise a watermarking module 202, a decoder 204, a memory 208 and a processor 210.

The watermarking module 202 may comprise suitable logic, circuitry, interfaces and/or code that may be operable to receive a compressed video stream such as the compressed video stream 220 for watermarking purpose. In an exemplary embodiment of the invention, the watermarking module 202 may be operable to receive, based on embedded watermarks in the compressed video stream 220 which comprises a plurality of video frames, a default version for each portion of each of the plurality of video frames in the compressed video stream 220, and an alternative version and corresponding watermark control information for one or more portions of one or more of the plurality of video frames in the compressed video stream 220. In an exemplary embodiment of the invention, the default version may comprise video data with no watermark and the alternative version may comprise the video data with a watermark. In another exemplary embodiment of the invention, the default version may comprise video data with one type of watermark and the alternative version may comprise the video data with a different type of watermark. A start code which may comprise a start code suffix with a data type value may be utilized for each of the default versions. A start code which may comprise a start code suffix with a first reserved value may be utilized for each of the alternative versions. A start code which may comprise a start code suffix with a second reserved value may be utilized for each of the corresponding watermark control information.

The watermarking module 202 may be operable to determine one or more of the default versions and/or one or more of the alternative versions that should be utilized for decoding the received compressed video stream 220, based on the corresponding watermark control information and/or specific information locally associated with the receiver 200. For example, according to information provided in the corresponding watermark control information, the determination between the default version and the alternative version may be based on model type, postal zip code, time zone, video connection type such as HDMI, component or s-video, and/or version of the system which may be associated with the receiver 200. The determination between the default version and the alternative version may also be, for example, based on identification (ID) number of the receiver 200 and/or ownership information which may be locally associated with the receiver 200. The determined one or more of the default versions and/or the determined one or more of the alternative versions may be selected by the watermarking module 202 for the decoding of the received compressed video stream 220. In this regard, the determined one or more of the default versions and/or the determined one or more of the alternative versions may be selected based on one or more start codes. In this regard, each of the start codes may comprise a start code suffix.

The watermarking module 202 may be operable to select a determined alternative version for a portion of one of the plurality of video frames for the decoding of the received compressed video stream 220 by modifying the start code of the determined alternative version so that the start code suffix of the determined alternative version may comprise the data type value. The start code of the corresponding default version, which is an unselected version, may then be modified so that the start code suffix of the corresponding default version may comprise an unused or reserved value such as, for example, the first reserved value or other reserved value. In this regard, for example, a determined alternative version may be selected for the decoding of the received compressed video stream 220 by swapping the first reserved value in the start code suffix of the determined alternative version and the data type value in the start code suffix of the default version which corresponds to the determined alternative version. Then, for each portion of each of the plurality of video frames, a version which comprises a start code suffix with the data type value may be processed or decoded by the decoder 204 during the processing or decoding of each of the video frames. Accordingly, a version which comprises a start code suffix with the first reserved value and the corresponding watermark control information which comprises a start code suffix with the second reserved value may be ignored by the decoder during the processing or decoding of each of the video frames.

In an exemplary embodiment of the invention, the compressed video stream 220 may comprise a H.264/MPEG-4 AVC compressed video stream 220a. The H.264/MPEG-4 AVC compressed video stream 220a may comprise a series of NAL units, and each of the series of NAL units may comprise the start code with the start code suffix. In this regard, for example, the NAL unit corresponding to the default version of a portion of a frame may comprise a slice of the frame with the data type value of 1 or 5 in the start code suffix. The NAL unit corresponding to the alternative version of a portion of a frame may comprise a slice of the frame with a reserved value of 30 in the start code suffix, for example. The NAL unit corresponding to each of the corresponding watermark control information may comprise data with a reserved value of 31 in the start code suffix, for example.

The decoder 204 may comprise suitable logic, circuitry, interfaces and/or code that may be operable to process or decode compressed data streams. In an exemplary embodiment of the invention, the decoder 204 may be operable to process or decode a modified compressed video stream which may be received from the watermarking module 202. In this regard, for each portion of each of the plurality of video frames, a version which comprises a start code suffix with the data type value may be processed or decoded by the decoder 204. A version which comprises a start code suffix with the first reserved value and the corresponding watermark control information which comprises a start code suffix with the second reserved value may be ignored by the decoder 204 during the processing or decoding of each of the frames.

The memory 208 may comprise suitable logic, circuitry, interfaces and/or code that may be operable to store information such as executable instructions and data that may be utilized by the processor 210, the decoder 204 and/or the watermarking module 202 to perform various functions of the receiver 200.

The processor 210 may comprise suitable logic, circuitry, interfaces and/or code that may be operable to communicate with the decoder 204 and the watermarking module 202 to perform the processing or decoding functions and the watermarking functions of the receiver 200.

In operation, the watermarking module 202 may be operable to receive, based on embedded watermarks in the compressed video stream 220 which comprises a plurality of video frames, a default version for each portion of each of the plurality of video frames in the compressed video stream 220, and an alternative version and corresponding watermark control information for one or more portions of one or more of the plurality of video frames in the compressed video stream 220. In an exemplary embodiment of the invention, the default version may comprise video data with no watermark and the alternative version may comprise the video data with a watermark. In another exemplary embodiment of the invention, the default version may comprise video data with one type of watermark and the alternative version may comprise the video data with a different type of watermark. A start code which may comprise a start code suffix with a data type value may be utilized for each of the default versions. A start code which may comprise a start code suffix with a first reserved value may be utilized for each of the alternative versions. A start code which may comprise a start code suffix with a second reserved value may be utilized for each of the corresponding watermark control information.

The watermarking module 202 may be operable to determine one or more of the default versions and/or one or more of the alternative versions that should be utilized for decoding the received compressed video stream 220, based on the corresponding watermark control information and/or specific information locally associated with the receiver 200. For example, according to information provided in the corresponding watermark control information, the determination between the default version and the alternative version may be based on model type, postal zip code, time zone, video connection type such as HDMI, component or s-video, and/or version of the system which may be associated with the receiver 200. The determination between the default version and the alternative version may also be, for example, based on identification (ID) number of the receiver 200 and/or ownership information which may be locally associated with the receiver 200. The determined one or more of the default versions and/or the determined one or more of the alternative versions may be selected by the watermarking module 202 for the decoding of the received compressed video stream 220 by modifying the received compressed video stream 220 based on the determination. In this regard, the determined one or more of the default versions and/or the determined one or more of the alternative versions may be selected based on one or more start codes, where each of the start codes may comprise a start code suffix.

The watermarking module 202 may be operable to select a determined alternative version for a portion of one of the plurality of video frames for the decoding of the received compressed video stream 220 by modifying the start code of the determined alternative version so that the start code suffix of the determined alternative version may comprise the data type value. The start code of the corresponding default version, which is an unselected version, may then be modified so that the start code suffix of the corresponding default version may comprise an unused or reserved value such as, for example, the first reserved value or other reserved value. In this regard, for example, a determined alternative version may be selected for the decoding of the received compressed video stream 220 by swapping the first reserved value in the start code suffix of the determined alternative version and the data type value in the start code suffix of the default version which corresponds to the determined alternative version. Then, for each portion of each of the plurality of video frames, a version which comprises a start code suffix with the data type value may be processed or decoded by the decoder 204 during the processing or decoding of each of the video frames. Accordingly, a version which comprises a start code suffix with the first reserved value and the corresponding watermark control information which comprises a start code suffix with the second reserved value may be ignored by the decoder during the processing or decoding of each of the video frames.

In an exemplary embodiment of the invention, the compressed video stream 220 may comprise a H.264/MPEG-4 AVC compressed video stream 220a. The H.264/MPEG-4 AVC compressed video stream 220a may comprise a series of NAL units, and each of the series of NAL units may comprise the start code with the start code suffix. In this regard, for example, the NAL unit corresponding to the default version of a portion of a frame may comprise a slice of the frame with the data type value of 1 or 5 in the start code suffix. The NAL unit corresponding to the alternative version of a portion of a frame may comprise a slice of the frame with a reserved value of 30 in the start code suffix, for example. The NAL unit corresponding to each of the corresponding watermark control information may comprise data with a reserved value of 31 in the start code suffix, for example.

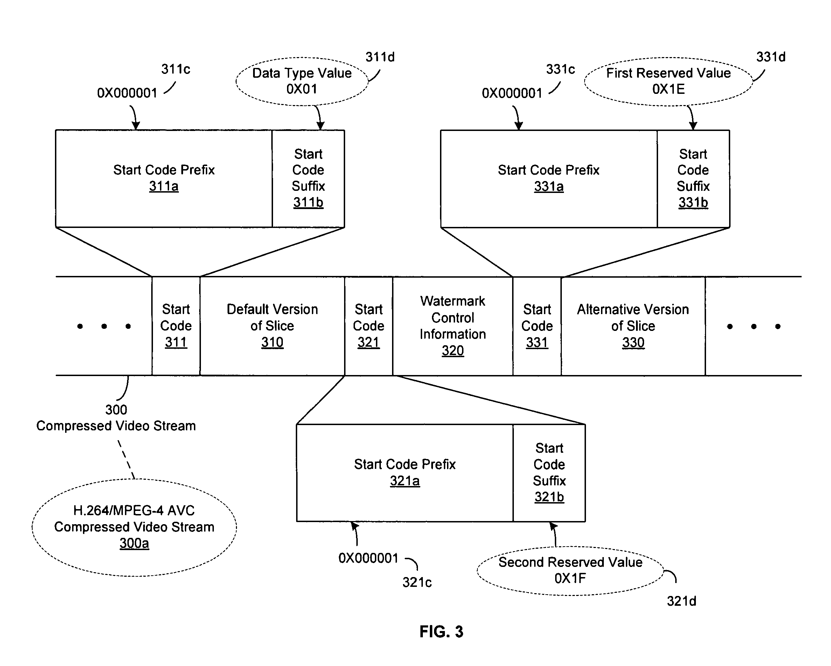

FIG. 3 is a block diagram illustrating an exemplary compressed video stream, in accordance with an embodiment of the invention. Referring to FIG. 3, there is shown a compressed video stream 300. The compressed video stream 300 may comprise a default version of slice 310, an alternative version of slice 330 and a watermark control information 320 in the stream. A slice is a portion of a frame in the compressed video stream 300, for example. The start code 311 of the default version of slice 310 may comprise a start code prefix 311 a and a start code suffix 311 b. The start code 321 of the watermark control information 320 may comprise a start code prefix 321 a and a start code suffix 321 b. The start code 331 of the alternative version of slice 330 may comprise a start code prefix 331 a and a start code suffix 331b. In an exemplary embodiment of the invention, the default version of slice 310 may comprise video data with no watermark and the alternative version of slice 330 may comprise the video data with watermark. In another exemplary embodiment of the invention may be that the default version of slice 310 may comprise video data with one type of watermark and the alternative version of slice 330 may comprise the video data with a different type of watermark. The watermark control information 320, along with some specific information which may be locally associated with a receiver such as the receiver 200, may be utilized by the watermarking module 202 in the receiver 200 to determine which of the default version of slice 310 or the alternative version of slice 330 to use for processing or decoding during decoding of the compressed video stream 300.

In an exemplary embodiment of the invention, the start code prefix 311a may comprise a value of 0X000001 311 c. The start code suffix 311 b may comprise a data type value associated with the slice. The start code prefix 331 a may comprise a value of 0X000001 331c. The start code suffix 331b may comprise a first reserved value. The start code prefix 321 a may comprise a value of 0X000001 321 c. The start code suffix 321 b may comprise a second reserved value. In this regard, for example, in a H.264/MPEG-4 AVC compressed video stream 300a, the default version of slice 310 may be a NAL unit with the start code suffix 311 b which may comprise a value of 0X01 311 d. The alternative version of slice 330 may be a NAL unit with the start code suffix 331 b which may comprise a value of 0X1E 331 d, for example. The watermark control information 320 may be a NAL unit with the start code suffix 321 b which may comprise a value of 0X1F 321 d, for example.

In the exemplary embodiment of the invention illustrated in FIG. 3, the default version of slice 310 with the data type value 0X01 311 d, the alternative version of slice 330 with the first reserved value 0X1E 331d, and the watermark control information 320 with the second reserved value 0X1F 321d are illustrated. The start code prefixes 311a, 321 a, 331 a, each with the value 0X000001 311c, 321 c, 331 c are also illustrated. Notwithstanding, the invention may not be so limited. Accordingly, a portion of a frame other than a slice may be illustrated. The start code prefix value, the data type value, the first reserved value and the second reserved value may be different.

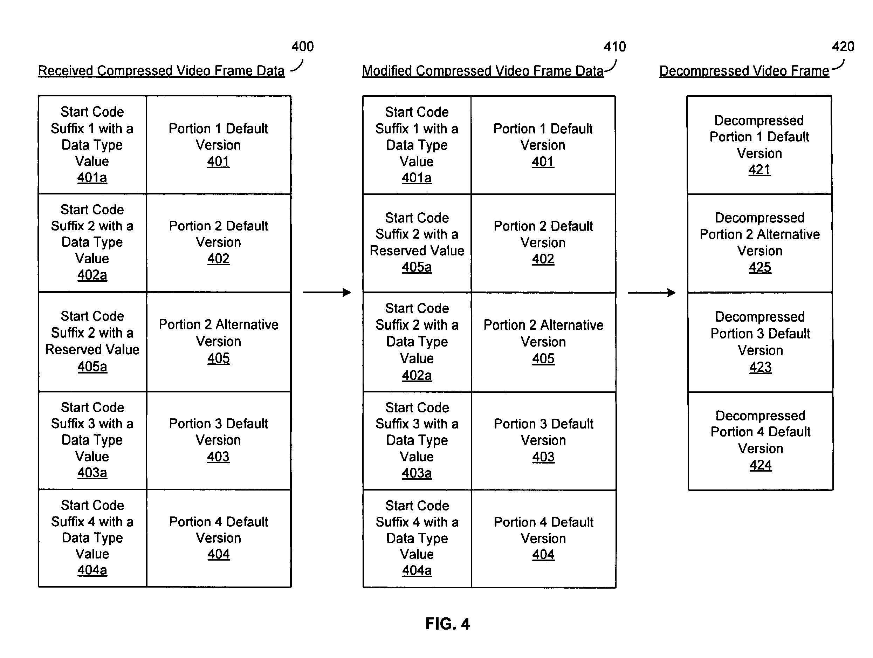

FIG. 4 is a block diagram illustrating an exemplary modified compressed video frame data for decoding, in accordance with an embodiment of the invention. Referring to FIG. 4, there is shown a received compressed video frame data 400, a modified compressed video frame data 410 and a decompressed video frame 420. The received compressed video frame data 400 may comprise a portion 1 default version 401, a portion 2 default version 402, a portion 2 alternative version 405, a portion 3 default version 403 and a portion 4 default version 404. The portion 1 default version 401 may be associated with a start code suffix 1 with a data type value 401 a. The portion 2 default version 402 may be associated with a start code suffix 2 with a data type value 402a. The portion 2 alternative version 405 may be associated with a start code suffix 2 with a reserved value 405a. The portion 3 default version 403 may be associated with a start code suffix 3 with a data type value 403a. The portion 4 default version 404 may be associated with a start code suffix 4 with a data type value 404a. The decompressed video frame 420 may comprise a decompressed portion 1 default version 321, a decompressed portion 2 alternative version 425, a decompressed portion 3 default version 423 and a decompressed portion 4 default version 424.

In an exemplary embodiment of the invention, the watermarking module 202 in the receiver 200 may be operable, based on corresponding watermark control information such as the watermark control information 320 and/or specific information locally associated with the receiver 200, to determine the portion 2 alternative version 405 as the selected version for portion 2 of the frame for decoding. In this regard, the watermarking module 202 may be operable, for example, to swap the start code suffix 2 with a data type value 402a and the start code suffix 2 with a reserved value 405a, as illustrated in the modified compressed video frame data 410. For each of the portions of the video frame, namely, portion 1, portion 2, portion 3 or portion 4, a version which comprises a start code suffix with a data type value may be processed or decoded by the decoder 204 in the receiver 200. A version which comprises a start code suffix with a reserved value may be ignored by the decoder 204. Accordingly, the portion 1 default version 401 may be decoded or decompressed by the decoder 204 to generate the decompressed portion 1 default version 421. The portion 2 alternative version 405 may be decoded or decompressed by the decoder 204 to generate the decompressed portion 2 alternative version 425. The portion 3 default version 403 may be decoded or decompressed by the decoder 204 to generate the decompressed portion 3 default version 423. The portion 4 default version 404 may be decoded or decompressed by the decoder 204 to generate the decompressed portion 4 default version 424.

In the exemplary embodiment of the invention illustrated in FIG. 4, the video frame comprises 4 portions, namely, portion 1, portion 2, portion 3 and portion 4, and only portion 2 comprises an alternative version. Notwithstanding, the invention is not so limited. The number of the portions of the video frame may be different, and the number of the portions which may comprise an alternative version may be different.

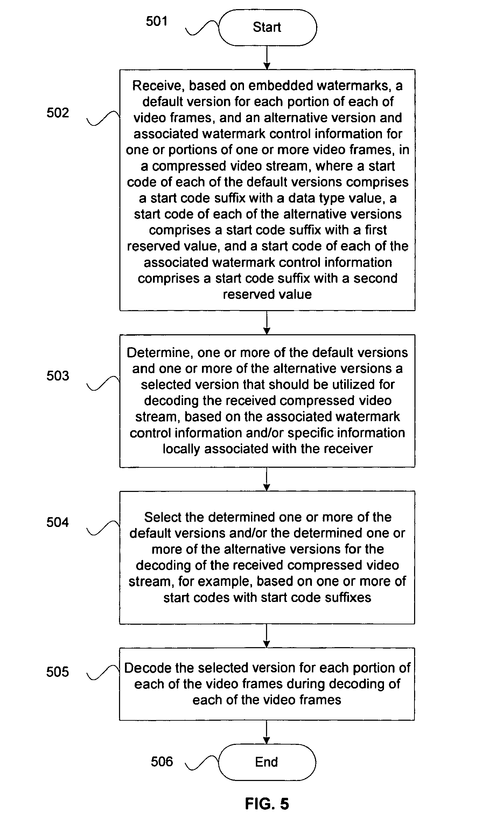

FIG. 5 is a flow chart illustrating exemplary steps for watermark insertion using video start codes, in accordance with an embodiment of the invention. Referring to FIG. 5, the exemplary steps start at step 501. In step 502, the watermarking module 202 in the receiver 200 may be operable to receive a default version 310 for each portion of each of a plurality of video frames, and an alternative version 330 and corresponding watermark control information 320 for one or more portions of one or more of the plurality of video frames, in the compressed video stream 300. A start code 311 of each of the default versions 310 may comprise a start code suffix 311 b with a data type value. A start code 331 of each of the alternative versions 330 may comprise a start code suffix 331 b with a first reserved value. A start code 321 of each of the corresponding watermark control information 320 may comprise a start code suffix 321 b with a second reserved value. In step 503, the watermarking module 202 may be operable to determine one or more of the default versions 401, 403, 404 and/or one or more of the alternative versions 405 that should be utilized for decoding the received compressed video stream 300, based on the corresponding watermark control information 320 and/or specific information which may be locally associated with the receiver 200. In step 504, the watermarking module 202 may be operable to select the determined one or more of the default versions 401, 403, 404 and/or the determined one or more of the alternative versions 405 for the decoding of the received compressed video stream 300, for example, based on one or more of start codes with start code suffixes. For example, the alternative version 405 may be selected by swapping the first reserved value in the start code suffix 405a of the alternative version 405 and the data type value in the start code suffix 402a of the default version 402. In step 505, the decoder 204 in the receiver 200 may be operable to decode the selected version 401, 403, 404, 405 for each portion of each of the plurality of video frames 410 during the decoding of each of the plurality of video frames 410. The exemplary steps may proceed to the end step 506.

In various embodiments of the invention, a watermarking module 202 in a receiver 200 may be operable to receive, based on embedded watermarks in a compressed video stream 300 which comprises a plurality of video frames, a default version 310 for each portion of each of the plurality of video frames in the compressed video stream 300, and an alternative version 330 and corresponding watermark control information 320 for one or more portions of one or more of the plurality of video frames in the compressed video stream 300. In an exemplary embodiment of the invention, the default version 310 may comprise video data with no watermark and the alternative version 330 may comprise the video data with a watermark. In another exemplary embodiment of the invention, the default version 310 may comprise video data with one type of watermark and the alternative version 330 may comprise the video data with a different type of watermark. A start code 311 which may comprise a start code suffix 311 b with a data type value may be utilized for each of the default versions 310. A start code 331 which may comprise a start code suffix 331 b with a first reserved value may be utilized for each of the alternative versions 330. A start code 321 which may comprise a start code suffix 321 b with a second reserved value may be utilized for each of the corresponding watermark control information 320.

The watermarking module 202 may be operable to determine one or more of the default versions 401, 403, 404 and/or one or more of the alternative versions 405 that should be utilized for decoding the received compressed video stream 300, based on the corresponding watermark control information 320 and/or specific information locally associated with the receiver 200. The determined one or more of the default versions 401, 403, 404 and/or the determined one or more of the alternative versions 405 may be selected by the watermarking module 202 for the decoding of the received compressed video stream 300 by modifying the received compressed video stream 300 based on the determination. In this regard, the determined one or more of the default versions 401, 403, 404 and/or the determined one or more of the alternative versions 405 may be selected based on one or more start codes 311, 331, where each of the start codes 311, 331 may comprise a start code suffix 311 b, 331 b.

The watermarking module 202 may be operable to select a determined alternative version 330 for a portion of one of the plurality of video frames for the decoding of the received compressed video stream 300 by modifying the start code 331 of the determined alternative version 330 so that the start code suffix 331 b of the determined alternative version 330 may comprise the data type value 311 d. The start code 311 of the corresponding default version 310, which is an unselected version, may then be modified so that the start code suffix 311 b of the corresponding default version 310 may comprise an unused or reserved value such as, for example, the first reserved value 331d or other reserved value. In this regard, for example, a determined alternative version 405 may be selected for the decoding of the received compressed video stream 300 by swapping the first reserved value in the start code suffix 405a of the determined alternative version 405 and the data type value in the start code suffix 4402a of the default version 402 which corresponds to the determined alternative version 405. Then, for each portion of each of the plurality of video frames 410, a version which comprises a start code suffix with the data type value, such as the portion 1 default version 401, the portion 2 alternative version 405, the portion 3 default version 403 or the portion 4 default version 404, may be processed or decoded by the decoder 204 during the decoding of each of the frames 410.

In an exemplary embodiment of the invention, the compressed video stream 300 may comprise a H.264/MPEG-4 AVC compressed video stream 300a. The H.264/MPEG-4 AVC compressed video stream 300a may comprise a series of NAL units, such as, for example, the default version of slice 310, the watermark control information 320 and the alternative version of slice 330. Each of the series of NAL units may comprise the start code such as the start code 311 with the start code suffix such as the start code suffix 311 b. In this regard, for example, the NAL unit corresponding to the default version 310 of a portion of a frame may comprise a slice of the frame with the data type value of 1 or 5 in the start code suffix 311 b, such as the data type value 0x01 311 d. The NAL unit corresponding to the alternative version 330 of a portion of a frame may comprise a slice of the frame with the first reserved value of 30 in the start code suffix 331b, such as the first reserved value 0X1E 331d. The NAL unit corresponding to each of the corresponding watermark control information 320 may comprise data with the second reserved value of 31 in the start code suffix 321 b, such as the second reserved value 0X1 F 321 d.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for watermark insertion using video start codes.

Accordingly, the present invention may be realized in hardware, software, or a combination of hardware and software. The present invention may be realized in a centralized fashion in at least one computer system or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for data processing, the method comprising:
in a receiver (130, 200):
receiving, in a compressed video stream (120, 220, 300) comprising a plurality of video frames, a default version (310) for each portion of each of said plurality of video frames in said compressed video stream, and an alternative version (330) and corresponding watermark control information (320) for one or more portions of one or more of said plurality of video frames in said compressed video stream;
determining, for the one or more portions, the default version or the corresponding alternative version that should be utilized for decoding said received compressed video stream according to information provided in said corresponding watermark control information and according to specific information locally associated with said receiver; and
selecting said determined version for each of said one or more portions for decoding said received compressed video stream by modifying said received compressed video stream;
wherein, according to said information provided in the corresponding watermark control information, the determination step is based on model type, postal zip code, video connection type such as HDMI, component or s-video, and/or version of the system which are associated with the receiver; and
wherein said default version comprises video data with no watermark, and
said alternative version comprises said video data with a watermark, or said default version comprises video data with one type of watermark, and
said alternative version comprises said video data with a different type of watermark.

2. The method according to claim 1, comprising selecting said determined version for each of said one or more portions for said decoding of said received compressed video stream based on one or more start codes, wherein each of said one or more start codes comprises a start code suffix.

3. The method according to claim 1, wherein a start code (311) which comprises said start code suffix (311 b) with said data type value (311 d) is utilized for said default version.

4. The method according to claim 1, wherein a start code (331) which comprises said start code suffix (331 b) with said first reserved value (331d) is utilized for said alternate version.

5. The method according to claim 1, wherein a start code (321) which comprises a start code suffix (321 b) with a second reserved value (321 d) is utilized for each of said corresponding watermark control information.

6. The method according to claim 1, comprising selecting a determined alternative version for a portion of one of said plurality of video frames for said decoding of said received compressed video stream by swapping a first reserved value (331 d) in a start code suffix (331 b) of said determined alternative version and a data type value (311 d) in a start code suffix (311 b) of said default version which corresponds to said determined alternative version.

7. The method according to claim 1, wherein said received compressed video stream comprises a H.264/MPEG-4 advanced video coding (AVC) compressed video stream.

8. The method according to claim 7, wherein said H.264/MPEG-4 AVC compressed video stream comprises a series of network abstraction layer (NAL) units, and each of said series of NAL units comprises a start code with a start code suffix.

9. A system for data processing, the system comprising:
one or more processors and/or circuits for use in a receiver (130, 200), wherein said one or more processors and/or circuits are operable to:
receive, in a compressed video stream (120, 220, 300) comprising a plurality of video frames, a default version (310) for each portion of each of said plurality of video frames in said compressed video stream, and an alternative version (330) and corresponding watermark control (320) information for one or more portions of one or more of said plurality of video frames in said compressed video stream;
determine, for the one or more portions, the default version or the corresponding alternative version that should be utilized for decoding said received compressed video stream according to information provided in said corresponding watermark control information and according to specific information locally associated with said receiver; and
select said determined version for each of said one or more portions for decoding said received compressed video stream by modifying said received compressed video stream;
wherein, according to said information provided in the corresponding watermark control information, the determination step is based on model type, postal zip code, video connection type such as HDMI, component or s-video, and/or version of the system which are associated with the receiver; and
wherein said default version comprises video data with no watermark, and said alternative version comprises said video data with a watermark, or
said default version comprises video data with one type of watermark, and said alternative version comprises said video data with a different type of watermark.

10. The system according to claim 9, wherein said one or more processors and/or circuits are operable to select said determined version for each of said one or more portions for said decoding of said received compressed video stream based on one or more start codes, wherein each of said one or more start codes comprises a start code suffix.

11. The system according to claim 9, wherein a start code (311) which comprises said start code suffix (311 b) with said data type value (311 d) is utilized for said default version.

12. The system according to claim 9, wherein a start code (331) which comprises said start code suffix (331 b) with said first reserved value (331 d) is utilized for said alternate version.

13. The system according to claim 9, wherein a start code (321) which comprises a start code suffix (321 b) with a second reserved value (321d) is utilized for each of said corresponding watermark control information.

## Patentansprüche

1. Verfahren zur Datenverarbeitung, wobei das Verfahren umfasst:
in einem Empfänger (130, 200):
Empfangen, in einem komprimierten Videostrom (120, 220, 300), der eine Vielzahl von Videoframes aufweist, einer Standardversion (310) für jeden Abschnitt jedes der Vielzahl von Videoframes in dem komprimierten Videostrom, und einer alternativen Version (300) und entsprechender Wasserzeichen-Steuerinformationen (320) für einen oder mehrere Abschnitte eines oder mehrerer der Vielzahl von Videoframes in dem komprimierten Videostrom;
Ermitteln, für den einen oder mehrere Abschnitte, der Standardversion oder der entsprechenden alternativen Version, die zum Dekodieren des empfangenen komprimierten Videostroms verwendet werden sollte, gemäß Informationen, die in den entsprechenden Wasserzeichen-Steuerinformationen vorgesehen sind, und gemäß spezifischen Informationen, die lokal zu dem Empfänger zugehörig sind; und
Auswählen der ermittelten Version für jeden des einen oder der mehreren Abschnitte zum Decodieren des empfangenen komprimierten Videostroms durch Modifizieren des empfangenen komprimierten Videostroms;
wobei, gemäß den in den entsprechenden Wasserzeichen-Steuerinformationen vorgesehenen Informationen, der Schritt des Ermittelns basiert auf Modelltyp, Postleitzahl, Videoverbindungstyp wie z.B. HDMI, Component oder S-Video, und/oder Version des Systems, die zu dem Empfänger zugehörig sind; und
wobei die Standardversion Videodaten ohne Wasserzeichen aufweist und die alternative Version die Videodaten mit Wasserzeichen aufweist, oder
wobei die Standardversion Videodaten mit einer Art von Wasserzeichen aufweist und die alternative Version die Videodaten mit einer anderen Art von Wasserzeichen aufweist.

2. Verfahren nach Anspruch 1, das das Auswählen der ermittelten Version für jeden des einen oder der mehreren Abschnitte zum Decodieren des empfangenen komprimierten Videostroms basierend auf einem oder mehreren Startcodes umfasst, wobei jeder des einen oder der mehreren Startcodes ein Startcode-Suffix aufweist.

3. Verfahren nach Anspruch 1, wobei ein Startcode (311), der das Startcode-Suffix (311 b) mit dem Datentypwert (311 d) aufweist, für die Standardversion verwendet wird.

4. Verfahren nach Anspruch 1, wobei ein Startcode (311), der das Startcode-Suffix (331b) mit dem ersten reservierten Wert (331d) aufweist, für die alternative Version verwendet wird.

5. Verfahren nach Anspruch 1, wobei ein Startcode (321), der ein Startcode-Suffix (321b) mit einem zweiten reservierten Wert (321d) aufweist, für jede der entsprechenden Wasserzeichen-Steuerinformationen verwendet wird.

6. Verfahren nach Anspruch 1, das das Auswählen einer ermittelten alternativen Version für einen Abschnitt eines der Vielzahl von Videoframes zum Decodieren des empfangenen komprimierten Videostroms durch Austauschen eines ersten reservierten Werts (331 d) in einem Startcode-Suffix (331b) der ermittelten alternativen Version und eines Datentypwerts (311 d) in einem Startcode-Suffix (311 b) der Standardversion, die der ermittelten alternativen Version entspricht, umfasst.

7. Verfahren nach Anspruch 1, wobei der empfangene komprimierte Videostrom einen komprimierten H.264/MPEG-4 Advanced Video Coding (AVC) Videostrom aufweist.

8. Verfahren nach Anspruch 7, wobei der komprimierte H.264/MPEG-4 AVC Videostrom eine Reihe von Network Abstraction Layer (NAL)-Einheiten aufweist und jede der Reihe von NAL-Einheiten einen Startcode mit einem Startcode-Suffix aufweist.

9. System zur Datenverarbeitung, wobei das System aufweist:
einen oder mehrere Prozessoren und/oder Schaltungen zur Verwendung in einem Empfänger (130, 200), wobei der eine oder die mehreren Prozessoren und/oder Schaltungen betreibbar sind zum:
Empfangen, in einem komprimierten Videostrom (120, 220, 300), der eine Vielzahl von Videoframes aufweist, einer Standardversion (310) für jeden Abschnitt jedes der Vielzahl von Videoframes in dem komprimierten Videostrom, und einer alternativen Version (300) und entsprechender Wasserzeichen-Steuerinformationen (320) für einen oder mehrere Abschnitte eines oder mehrerer der Vielzahl von Videoframes in dem komprimierten Videostrom;
Ermitteln, für den einen oder mehrere Abschnitte, der Standardversion oder der entsprechenden alternativen Version, die zum Dekodieren des empfangenen komprimierten Videostroms verwendet werden sollte, gemäß Informationen, die in den entsprechenden Wasserzeichen-Steuerinformationen vorgesehen sind, und gemäß spezifischen Informationen, die lokal zu dem Empfänger zugehörig sind; und
Auswählen der ermittelten Version für jeden des einen oder der mehreren Abschnitte zum Decodieren des empfangenen komprimierten Videostroms durch Modifizieren des empfangenen komprimierten Videostroms;
wobei, gemäß den in den entsprechenden Wasserzeichen-Steuerinformationen vorgesehenen Informationen, der Schritt des Ermittelns basiert auf Modelltyp, Postleitzahl, Videoverbindungstyp wie z.B. HDMI, Component oder S-Video, und/oder Version des Systems, die zu dem Empfänger zugehörig sind; und
wobei die Standardversion Videodaten ohne Wasserzeichen aufweist und die alternative Version die Videodaten mit Wasserzeichen aufweist, oder
wobei die Standardversion Videodaten mit einer Art von Wasserzeichen aufweist und die alternative Version die Videodaten mit einer anderen Art von Wasserzeichen aufweist.

10. System nach Anspruch 9, wobei der eine oder die mehreren Prozessoren und/oder Schaltungen dazu betreibbar sind, die ermittelte Version für jeden des einen oder der mehreren Abschnitte zum Decodieren des empfangenen komprimierten Videostroms basierend auf einem oder mehreren Startcodes auszuwählen, wobei jeder des einen oder der mehreren Startcodes ein Startcode-Suffix aufweist.

11. System nach Anspruch 9, wobei ein Startcode (311), der das Startcode-Suffix (311 b) mit dem Datentypwert (311 d) aufweist, für die Standardversion verwendet wird.

12. System nach Anspruch 9, wobei ein Startcode (311), der das Startcode-Suffix (331b) mit dem ersten reservierten Wert (331 d) aufweist, für die alternative Version verwendet wird.

13. System nach Anspruch 9, wobei ein Startcode (321), der ein Startcode-Suffix (321 b) mit einem zweiten reservierten Wert (321 d) aufweist, für jede der entsprechenden Wasserzeichen-Steuerinformationen verwendet wird.

## Revendications

1. Procédé de traitement de données, le procédé comprenant :
dans un récepteur (130, 200) :
la réception, dans un flux vidéo compressé (120, 220, 300) comprenant une pluralité de trames vidéo, d'une version par défaut (310) pour chaque partie de chacune de ladite pluralité de trames vidéo dans ledit flux vidéo compressé, et d'une version alternative (330) et d'une information de contrôle de filigrane (320) correspondante pour une ou plusieurs parties d'une ou plusieurs parmi ladite pluralité de trames vidéo dans ledit flux vidéo compressé ;
la détermination, pour l'une ou les plusieurs parties, de la version par défaut ou de la version alternative correspondante qui doit être utilisée pour décoder ledit flux vidéo compressé reçu en fonction d'une information prévue dans ladite information de contrôle de filigrane correspondante et en fonction d'une information spécifique localement associée avec ledit récepteur; et
la sélection de ladite version déterminée pour chacune de ladite une ou desdites plusieurs parties pour décoder ledit flux vidéo compressé reçu en modifiant ledit flux vidéo compressé reçu ;
dans lequel, en fonction de ladite information prévue dans l'information de contrôle de filigrane correspondante, l'étape de détermination est basée sur un type de modèle, un code postal, un type de connexion vidéo tel que HDMI, composant ou s-vidéo, et/ou une version du système qui sont associés avec le récepteur ; et
dans lequel ladite version par défaut comprend des données vidéo sans filigrane, et ladite version alternative comprend lesdites données vidéo avec un filigrane, ou bien
ladite version par défaut comprend des données vidéo avec un type de filigrane, et ladite version alternative comprend lesdites données vidéo avec un type différent de filigrane.

2. Procédé selon la revendication 1, comprenant la sélection de ladite version déterminée pour chacune de ladite une ou desdites plusieurs parties pour ledit décodage dudit flux vidéo compressé reçu sur la base d'un ou plusieurs codes initiaux, dans lequel chacun dudit un ou desdits plusieurs codes initiaux comprend un suffixe de code initial.

3. Procédé selon la revendication 1, dans lequel un code initial (311) qui comprend ledit suffixe (311 b) de code initial avec ladite valeur (311 d) de type de données est utilisé pour ladite version par défaut.

4. Procédé selon la revendication 1, dans lequel un code initial (331) qui comprend ledit suffixe (331 b) de code initial avec ladite première valeur (331d) réservée est utilisé pour ladite version alternative.

5. Procédé selon la revendication 1, dans lequel un code initial (321) qui comprend un suffixe (321b) de code initial avec une deuxième valeur (321d) réservée est utilisé pour chacune desdites informations de contrôle de filigrane correspondantes.

6. Procédé selon la revendication 1, comprenant la sélection d'une version alternative déterminée pour une partie d'une parmi ladite pluralité de trames vidéo pour ledit décodage dudit flux vidéo compressé reçu par échange d'une première valeur (331 d) réservée dans un suffixe (331 b) de code initial de ladite version alternative déterminée et d'une valeur (311 d) de type de données dans un suffixe (311 b) de code initial de ladite version par défaut qui correspond à ladite version alternative déterminée.

7. Procédé selon la revendication 1, dans lequel ledit flux vidéo compressé reçu comprend un flux vidéo compressé par codage vidéo avancé (AVC) H.264/MPEG-4.

8. Procédé selon la revendication 7, dans lequel ledit flux vidéo compressé AVC H.264/MPEG-4 comprend une série d'unités de couches d'abstraction de réseau (NAL), et chacune de ladite série d'unités NAL comprend un code initial avec un suffixe de code initial.

9. Système de traitement de données, le système comprenant :
un ou plusieurs processeurs et/ou circuits destinés à une utilisation dans un récepteur (130, 200), dans lequel ledit un ou lesdits plusieurs processeurs et/ou circuits sont utilisables pour :
recevoir, dans un flux vidéo compressé (120, 220, 300) comprenant une pluralité de trames vidéo, une version par défaut (310) pour chaque partie de chacune de ladite pluralité de trames vidéo dans ledit flux vidéo compressé, et une version alternative (330) et une information de contrôle de filigrane (320) correspondante pour une ou plusieurs parties d'une ou plusieurs parmi ladite pluralité de trames vidéo dans ledit flux vidéo compressé ;
déterminer, pour l'une ou les plusieurs parties, la version par défaut ou la version alternative correspondante qui doit être utilisée pour décoder ledit flux vidéo compressé reçu en fonction d'une information prévue dans ladite information de contrôle de filigrane correspondante et en fonction d'une information spécifique localement associée avec ledit récepteur ; et
sélectionner ladite version déterminée pour chacune de ladite une ou desdites plusieurs parties pour décoder ledit flux vidéo compressé reçu en modifiant ledit flux vidéo compressé reçu ;
dans lequel, en fonction de ladite information prévue dans l'information de contrôle de filigrane correspondante, l'étape de détermination est basée sur un type de modèle, un code postal, un type de connexion vidéo tel que HDMI, composant ou s-vidéo, et/ou une version du système qui sont associés avec le récepteur ; et
dans lequel ladite version par défaut comprend des données vidéo sans filigrane, et ladite version alternative comprend lesdites données vidéo avec un filigrane, ou bien
ladite version par défaut comprend des données vidéo avec un type de filigrane, et ladite version alternative comprend lesdites données vidéo avec un type différent de filigrane.

10. Système selon la revendication 9, dans lequel ledit un ou lesdits plusieurs processeurs et/ou circuits sont utilisables pour sélectionner ladite version déterminée pour chacune de ladite une ou desdites plusieurs parties pour ledit décodage dudit flux vidéo compressé reçu sur la base d'un ou plusieurs codes initiaux, dans lequel chacun dudit un ou desdits plusieurs codes initiaux comprend un suffixe de code initial.

11. Système selon la revendication 9, dans lequel un code initial (311) qui comprend ledit suffixe (311 b) de code initial avec ladite valeur (311 d) de type de données est utilisé pour ladite version par défaut.

12. Système selon la revendication 9, dans lequel un code initial (331) qui comprend ledit suffixe (331b) de code initial avec ladite première valeur (331d) réservée est utilisé pour ladite version alternative.

13. Système selon la revendication 9, dans lequel un code initial (321) qui comprend un suffixe (321b) de code initial avec une deuxième valeur (321d) réservée est utilisé pour chacune desdites informations de contrôle de filigrane correspondantes.
